# EUROPEAN PATENT APPLICATION

(11) **EP 2 260 929 A1**
(43) Date of publication of application: **15.12.2010**
(21) Application number: 08720635.5
(22) Date of filing: 27.03.2008
(51) Int. Cl.: B01D 63/08, B01D 63/00

(54) **MEMBRANE ELEMENT AND MEMBRANE MODULE**

(71) Applicant: Kubota Corporation, Osaka-shi Osaka 556-8601 (JP)
(72) Inventor: MASUTANI, Hidetoshi, Hyogo 661-8567 (JP); OKAJIMA, Yasunobu, Hyogo 661-8567 (JP); KITANO, Tomokazu, Hyogo 661-8567 (JP)
(74) Representative: le Vrang, Klaus
(86) International application number: PCT/JP2008/000756
(87) International publication number: WO 2009/118788

(57) **Abstract**

When permeate pushed up by aeration presses a filtration membrane, the reversed portion of the filtration membrane flexibly swells to allow the permeate to move and suppresses a load acting on the filtration membrane, thereby preventing the filtration membrane from being broken.

## Description

### Technical Field

The present invention relates to a membrane element and a membrane module that are used for filtration or concentration in the water treatment of tap water, wastewater, and the like.

### Background Art

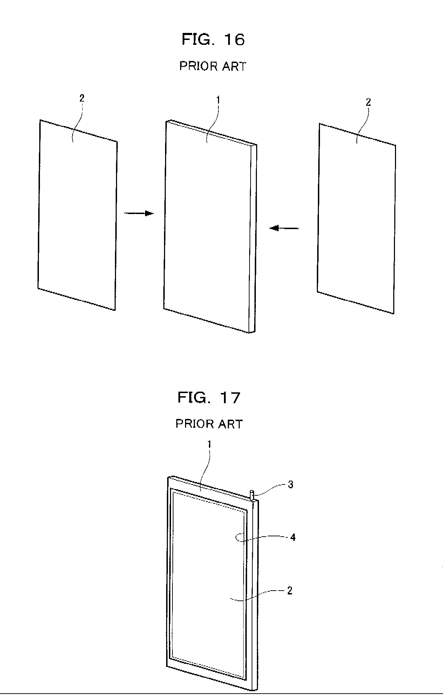

As a conventional membrane separator, for example, a submerged membrane filtration apparatus having a plurality of membrane elements arranged in parallel at appropriate intervals is known. As the membrane element, for example, there is a membrane element shown in FIGS. 16 and 17. In FIGS. 16 and 17, in the membrane element, filtration membranes 2 formed of an organic membrane are arranged to cover the surfaces of a rectangular flat filtration plate 1, which is a membrane supporting member, and the filtration membranes 2 are jointed to the filtration plate 1 in the peripheral edge of the filtration membranes 2. The filtration plate 1 has a water collecting port 3. For example, as the membrane supporting member, the filtration plate 1 made of resin is described as an example. However, in some case, a membrane supporting member made of a flexible material such as non-woven fabric or a net may be used.

The membrane element receives a driving pressure and filters water to be treated with through the filtration membrane 2. The membrane element is used for gravity filtration, using a head pressure in a tank as the driving pressure or suction filtration with a negative pressure given as the driving pressure to the inner side of the filtration membrane 2.

As a method of joining the filtration plate 1 and the filtration membranes 2 in such a membrane element, for example, welding and bonding are performed. The welding is a method of melting the resin of the filtration plate 1 using ultrasound to form a welded portion 4 and joining the filtration plate 1 and the filtration membranes 2 in the welded portion 4. The bonding is performed using an adhesive to join the filtration plate 1 and the filtration membrane 2.

As a method of joining such a filtration plate 1 and filtration membranes 2, for example, there is a method described in Japanese Patent No. 3010979. The method involves arranging a filtration membrane on the surface of a filtration plate, applying ultrasonic vibrations from above the filtration membrane along the peripheral edge of the filtration membrane, and welding the filtration membrane to the filtration plate with the frictional heat of caused by ultrasonic vibrations.

A method described in Japanese Patent Application Laid-Open No. H11-33370 involves stacking two flat. membranes via a spacer and welding or bonding the two flat membranes end to end on both sides of the flat membranes to form a filtration membrane body.

A method described in Japanese Patent No. 3815645 involves forming a separator unit by attaching filtration membranes via spacers on both surfaces of a member having a water passing function and forming a hollow portion in a joining member for joining membrane ends.

### Disclosure of the Invention

### Problems to be Solved by the Invention

When the above-described membrane separator is used, the membrane separator is immersed in an activated sludge mixture in an aeration tank, and air for aeration is diffused from an air diffuser. In this state, a driving pressure is applied to the membrane element to filter the activated sludge mixture and permeate having permeated through the filtration membrane is led out to the outside of the tank as treated water.

At this point, upflow is caused by the air-lift action of bubbles of the air for aeration diffused from the air diffuser. The membrane surface of the filtration membrane of the membrane element is aerated and cleaned by this upflow. Thus a decrease in separating function due to fouling is suppressed and the membrane separator is prevented from being nonfunctional.

In this way, the process of aerating for cleaning is necessary to prevent the membrane separator from fouling. In this case, it has been known that a cleaning effect is improved if aeration is performed in a state in which a filtration operation is stopped.

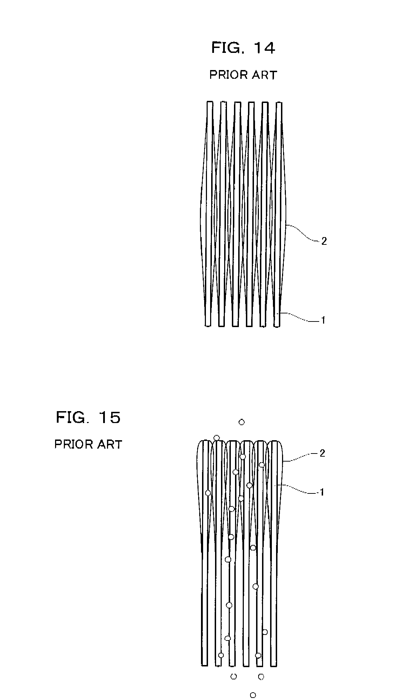

However, as shown in FIG. 14, if the membrane separator is left in the state in which the filtration operation is stopped, permeate accumulates in the inside of the membrane element, i.e., between the filtration plate 1 and the filtration membranes 2 and the filtration membranes 2 slightly swell.

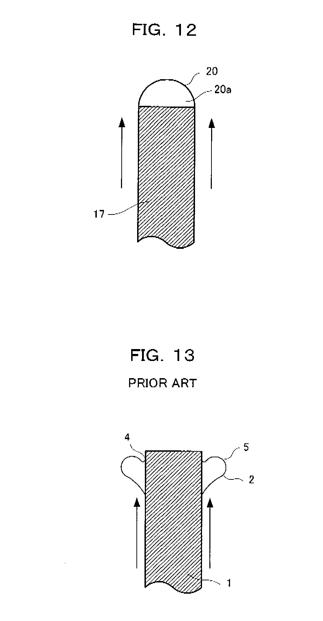

As shown in FIG. 15, when only the aeration is performed in the state in which the filtration operation is stopped, the permeate having accumulated between the filtration plate 1 and the filtration membranes 2 is pushed upward by upflow. As a result, as shown in FIG. 13, the filtration membrane 2 is folded in the welded portion 4 to form a swell 5 near the upper part of the membrane element. This swell 5 acts as a resistance against the upflow, and vibrations and stresses occur on the filtration membrane 2. Therefore, the filtration membrane 2 is likely to peel off in the welded portion 4 or be broken near the welded portion 4.

The present invention solves the problems and it is an object of the present invention to provide a membrane element and a membrane module in which peeling and breakage are unlikely to occur on a filtration membrane.

### Means for Solving the Problems

In order to attain the object, a membrane element according to the present invention includes: a membrane supporting member arranged along the flowing direction of a liquid to be treated; a filtration membrane formed of a flat sheet membrane that is arranged to cover the surfaces on the front and back of the membrane supporting member; the reversed portion of the filtration membrane folded to include the end on the downstream side of the membrane supporting member; and a seal portion formed in the peripheral edge portion of the filtration membrane.

In the membrane element of the present invention, the seal portion includes: a joined portion for joining the edge side portion on the upstream side of the filtration membrane to the membrane supporting member; and a sealing material for binding the edge side portion of the filtration membrane onto the membrane supporting member on both sides of the membrane supporting member along the flowing direction of the liquid to be treated.

Alternatively, in the membrane element of the present invention, the seal portion includes: a joined portion for joining the edge side portions on the upstream side of the filtration membrane to each other, the edge side portions on the upstream side being opposed in the front-to-back direction of the membrane supporting member outside the end of the membrane supporting member; and a sealing material for binding the edge side portion of the filtration membrane onto the membrane supporting member on both sides of the membrane supporting member along the flowing direction of the liquid to be treated.

Alternatively, in the membrane element of the present invention, the seal portion includes a joined portion for joining the peripheral edge portion of the filtration membrane to the membrane supporting member over the entire periphery of the filtration membrane.

Alternatively, in the membrane element of the present invention, the seal portion includes a joined portion for joining the peripheral edge portions of the filtration membrane to each other, the peripheral edge portions being opposed in the front-to-back direction of the membrane supporting member outside the end of the membrane supporting member, over the entire periphery of the filtration membrane.

A membrane module of the present invention includes: at least one·membrane element; and a pair of water collecting cases. The membrane element includes: a membrane supporting member arranged along the flowing direction of a liquid to be treated; a filtration membrane formed of a flat sheet membrane that is arranged to cover the surfaces on the front and back of the membrane supporting member; the reversed portion of the filtration membrane folded to include the end on the downstream side of the membrane supporting member; a joined portion for joining the edge side portion on the upstream side of the filtration membrane to the membrane supporting member; and a sealing material for binding the edge side portion of the filtration membrane onto the membrane supporting member on both sides of the membrane supporting member along the flowing direction of the liquid to be treated. Each of the water collecting cases includes an opening portion communicating with a water collecting space in the water collecting case, and the side of the membrane element inserted in the opening portion is water-tightly kept by the sealing material.

A membrane module of the present invention includes: at least one membrane element; and a pair of water collecting cases. The membrane element includes: a membrane supporting member arranged along the flowing direction of a liquid to be treated; a filtration membrane formed of a flat sheet membrane that is arranged to cover the surfaces on the front and back of the membrane supporting member; the reversed portion of the filtration membrane folded to include the end on the downstream side of the membrane supporting member; a joined portion for joining the edge side portions on the upstream side of the filtration membrane to each other, the edge side portions on the upstream side being opposed in the front-to-back direction of the membrane supporting member outside the end of the membrane supporting member; and a sealing material for binding the edge side portion of the filtration membrane onto the membrane supporting member on both sides of the membrane supporting member along the flowing direction of the liquid to be treated. Each of the water collecting cases includes an opening portion communicating with a water collecting space in the water collecting case, and the side of the membrane element inserted in the opening portion is water-tightly kept by the sealing material.

### Advantages of the Invention

According to the present invention, in a state in which a filtration operation is stopped, permeate present between the membrane supporting member and the filtration membrane is pushed to the downstream side of the flow of the liquid to be treated and is collected in the reversed portion. The filtration membrane flexibly swells in the reversed portion to allow the permeate to move. Further, since the swell of the reversed portion occurs in the downstream area of the end on the downstream side of the membrane supporting member, the swell of the reversed portion does not act as a resistance against the flow of the liquid to be treated flowing along the membrane supporting member. Vibrations and stresses do not occur in the filtration membrane because of the swell of the reversed portion. Therefore, it is possible to suppress a load acting on the filtration membrane and prevent the filtration membrane from being broken.

### Brief Description of the Drawings

FIG. 1 is a perspective view showing a membrane cassette in a first embodiment of the present invention;
FIG. 2 is a sectional view showing a main part in a membrane module of the membrane cassette;
FIG. 3 is a perspective view showing a membrane element having a first configuration in the first embodiment of the present invention;
FIG. 4 is a perspective view showing the membrane element having the first configuration in the first embodiment of the present invention;
FIG. 5 is a front view showing the membrane element having the first configuration in the first embodiment of the present invention;
FIG. 6 is a perspective view showing a membrane element having a second configuration in the first embodiment of the present invention;
FIG. 7 is a perspective view showing the membrane element having the second configuration in the first embodiment of the present invention;
FIG. 8 is a perspective view showing a membrane element in a second embodiment of the present invention;
FIG. 9 is a perspective view showing a membrane element in a third embodiment of the present invention;
FIG. 10 is a perspective view showing the membrane element in the third embodiment of the present invention;
FIG. 11 is a perspective view showing the membrane element in the third embodiment of the present invention;
FIG. 12 is a schematic diagram showing an action of a membrane element of the present invention;
FIG. 13 is a schematic diagram showing an action of a conventional membrane element;
FIG. 14 is a side view showing the conventional membrane element;
FIG. 15 is a side view showing the conventional membrane element;
FIG. 16 is an exploded perspective view showing the conventional membrane element; and
FIG. 17 is a perspective view showing the conventional membrane element.

### Best Mode for Carrying Out the Invention

Embodiments of the present invention are explained below on the basis of the drawings.

### (First Embodiment)

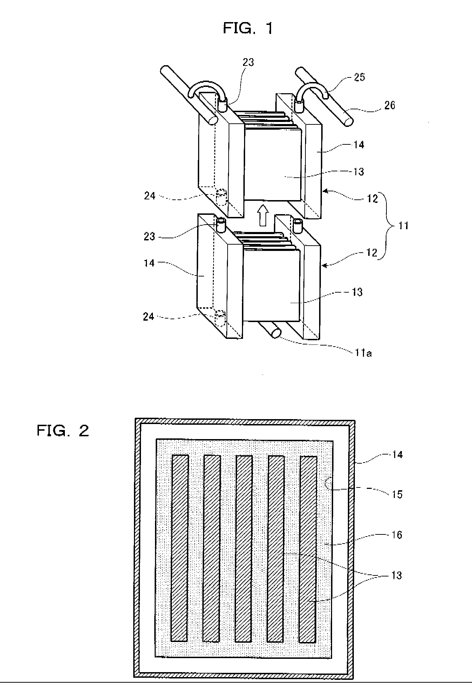

In FIGS. 1 to 4, a membrane cassette 11 forming a membrane separator includes a plurality of vertically-stacked membrane modules 12. The membrane cassette 11 is set and immersed in a liquid to be treated in a treatment tank (not shown). In the membrane cassette 11, an air diffuser 11a is arranged below the lower membrane module 12.

In the membrane module 12, a plurality of membrane elements 13 are arranged in parallel at predetermined intervals to form channels in a vertical direction between the membrane elements 13. Both sides along the flowing direction of the liquid to be treated of each of the membrane elements 13 are water-tightly sealed respectively to water collecting cases 14. Each of the water collecting cases 14 is hollow-shaped and has a water collecting space therein. Although the water collecting case 14 is formed like a square box, the water collecting case 14 may be in a shape other than a square.

In this embodiment, a configuration in which the membrane elements 13 are arranged in the up-to-down direction is explained. However, the arranging direction of the membrane elements 13 is not limited to the up-to-down direction. The membrane elements 13 only have to be arranged along the flowing direction of the liquid to be treated. Therefore, as explained later, it is also possible to arrange the membrane elements 13 in the horizontal direction or obliquely.

The membrane module 12 includes upper coupling portions 23 provided on the upper end faces of the water collecting cases 14 and lower coupling portions 24 provided on the lower end faces thereof. The upper coupling portions 23 and the lower coupling portions 24 form channels and communicate with the water collecting spaces of the water collecting cases 14.

The lower coupling portions 24 of the upper membrane module 12 and the upper coupling portions 23 of the lower membrane modules 12 are coupled. The upper coupling portions 23 of the water collecting cases 14 of the upper membrane module 12 communicate with water collecting pipes 26 via tubes 25.

However, the lower coupling portions 24 of the lower membrane module 12 can also communicate with the water collecting pipes 26 via the tubes 25. Further, the lower coupling portions 24 or the upper coupling portions 23 can also communicate with the water collecting pipes 26 not via the tubes 25 but directly.

In this embodiment, the lower coupling portions 24 of the lower membrane module 12 are closed by plugs (not shown). However, it is also possible to use a membrane module having no lower coupling portions 24 as the lower membrane module 12.

As shown in FIG. 2, the plurality of membrane element 13 are water-tightly joined by each of the water collecting cases 14 via a sealing material (resin, etc.) 16 potted in an opening portion 15. However, the water collecting case 14 is not limited to the configuration shown in FIG. 2. There are various structures for water-tightly joining the membrane elements 13 to the water collecting case 14. For example, it is also possible to form a plurality of slits instead of the single opening portion 15 of the water collecting case 14, insert the membrane elements 13 in the slits, and pot the sealing material 16 of resin or the like in the slits. Alternatively, it is also possible to arrange a seal material such as rubber around the membrane elements 13.

### (First configuration of the membrane element)

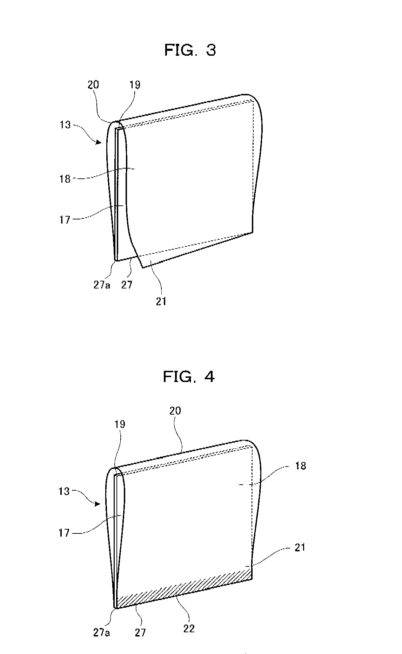

As shown in FIGS. 3 and 4, the membrane element 13 includes a filtration plate 17 made of resin, which forms a membrane supporting member, and a filtration membrane 18 made of a flat sheet membrane (an organic membrane) arranged to cover the principal surfaces on the front and back of the filtration plate 17. In each of the membrane elements 13, a permeate channel formed between the principal surfaces on the front and back of the filtration plate 17 and the filtration membrane 18 communicates with the water collecting space of the water collecting case 14. In this embodiment, the filtration plate 17 made of resin is explained as an example of the membrane supporting member. However, in some case, a membrane supporting member of a flexible material such as non-woven fabric or a net is used.

The upper end side of the membrane element 13 is located on the downstream side in the flowing direction of the liquid to be treated. The lower end side of the membrane element 13 is located on the upstream side in the flowing direction of the liquid to be treated. The filtration membrane 18 includes a reversed portion 20 folded to include an end 19 on the downstream side of the filtration plate 17. A seal portion explained below is formed in the peripheral edge portion of the filtration membrane 18. The entire filtration membrane 18 may be one sheet or the filtration membrane 18 may be formed by joining a plurality of membranes.

An edge side portion 21 on the upstream side of the filtration membrane 18 is joined to the end on the upstream side of the filtration plate 17 to form a joined portion 22. The joined portion 22 forms a part of the seal portion. The end edge of the filtration membrane 18 can also be bent and joined to an end face 27a of an end 27 on the upstream side of the filtration plate 17.

In this embodiment, the joined portion 22 is formed by applying ultrasonic vibrations from above the filtration membrane 18 and welding the filtration plate 17 and the filtration membrane 18 with frictional heat However, the filtration plate 17 and the filtration membrane 18 may be joined with an adhesive.

The membrane elements 13 having this structure are arranged in parallel at predetermined intervals, the plurality of membrane elements 13 are water-tightly fixed by the sealing material 16 that is arranged between the membrane elements 13, the edge side portion of the filtration membrane 18 is bound by the sealing material 16 on the filtration plate 17 on both sides of the filtration plate 17 along the flowing direction of the liquid to be treated, and a part of the seal portion is formed by the sealing material 16.

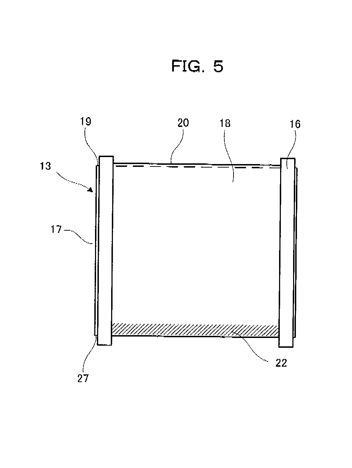

However, as shown in FIG. 5, the sealing material 16 can be formed for each of the membrane element 13. The edge side portion of the filtration membrane 18 is bound by the sealing material 16 on the filtration plate 17 for each of the membrane elements 13 on both sides of the filtration plate 17 along the flowing direction of the liquid to be treated. Thereafter, it is possible to arrange the membrane elements 13 having this structure in parallel at predetermined intervals and bind the plurality of membrane elements 13 with the sealing material (resin, etc.) 16 arranged between the membrane elements 13. Further, as explained above, it is possible to arrange a seal material such as a rubber material on the filtration membrane 18 and join the filtration membrane 18 to the filtration plate 17.

### (Second configuration of the membrane element)

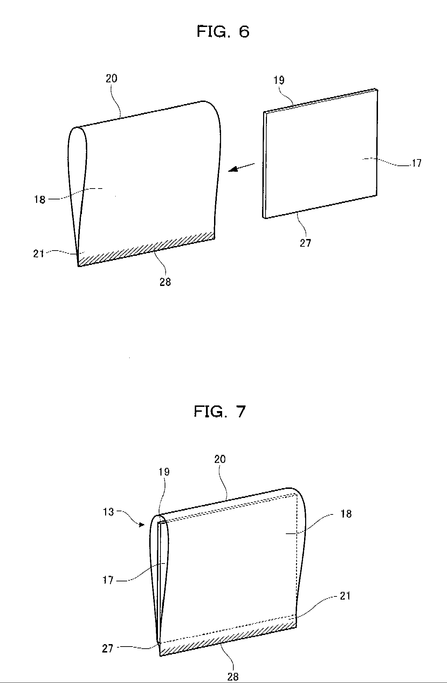

The membrane element 13 can have a structure shown in FIGS. 6 and 7. In FIGS. 6 and 7, in the membrane element 13, the filtration membrane 18 includes the reversed portion 20 folded to include the end 19 on the downstream side of the filtration plate 17. The edge side portions 21 on the upstream side of the filtration membrane 18 are opposed to each other in the front-to-back direction of the filtration plate 17 outside the end 27 on the upstream side of the filtration plate 17. The edge side portions 21 on the upstream side are joined to each other to form a joined portion 28. This joined portion 28 forms a part of the seal portion and is formed by welding with ultrasound or bonding with an adhesive.

The membrane elements 13 having this structure are arranged in parallel at predetermined intervals, the plurality of membrane elements 13 are water-tightly fixed by the sealing material (resin, etc.) 16 arranged between the membrane elements 13, the edge side portion of the filtration membrane 18 is bound by the sealing material 16 on the filtration plate 17 on both sides of the filtration plate 17 along the flowing direction of the liquid to be treated, and a part of the seal portion is formed by the sealing material 16.

Regardless of which of the membrane elements 13 having the first and second configurations is used, the following operations and effects are realized in the membrane module 12 of the present invention.

### Normal operation

Air is diffused as a gas for aeration from the air diffuser 11a arranged below the lower membrane module 12. Upflow of air-liquid mixtures is caused inside the membrane cassette 11 by the air-lift action of bubbles of the air. The liquid to be treated in a treatment tank (not shown) is supplied between the membrane elements 13 by this upflow. A flow of the liquid to be treated along the membrane surfaces of the membrane elements 13 is formed. The liquid to be treated is supplied as a cross flow with respect to the flow of permeate flowing to permeate through the filtration membrane 18.

In this embodiment, the liquid to be treated is supplied as the cross flow by the upflow caused by the ai.r-lift action. Therefore, the membrane elements 13 are arranged in the up-to-down direction. However, when the liquid to be treated is supplied as the cross flow between the membrane elements 13 by a power unit such as a pump, the membrane elements 13 can also be arranged in the horizontal or oblique direction.

There are various systems for applying a driving pressure to the membrane elements 13. In this embodiment, an activated sludge mixture in the tank is gravity-filtrated by the membrane elements 13 with a water head in the tank as a driving pressure. Alternatively, a suction pressure is applied to the membrane modules 12 of the membrane cassette 11 as a driving pressure through the water collecting pipes 26 and the tubes 25 by a suction pump to suck and filter the activated sludge mixture.

The permeate having permeated through the filtration membranes 18 of the membrane elements 13 with the driving pressure flows into the water collecting spaces of the water collecting cases 14 through the permeate channels between the filtration membranes 18 and the filtration plates 17. The permeate having flowed into the water collecting cases 14 of the lower membrane module 12 flows into the water collecting cases 14 of the upper membrane module 12 from the lower coupling portions 24 through the upper coupling portions 23. The permeate having flowed into the water collecting cases 14 of the upper membrane module 12 is led out to the outside of the tank as treated water from the upper coupling portions 23 through the tubes 25 and the water collecting pipes 26.

During this operation, the activated sludge mixture is supplied as a cross flow to the channels between the membrane elements 13 by upflow. The membrane surfaces of the membrane elements 13 are aerated and cleaned by the upflow. Thus a decrease in separating function due to fouling is suppressed and the membrane separator is prevented from being nonfunctional.

### Aeration and cleaning operation

In the case of the gravity filtration, valves (not shown) provided in the water collecting pipes 26 are closed. In the case of the suction filtration, the suction pump is stopped to stop the filtration operation. When the air diffuser 11a is operated to perform the aeration and cleaning in this state, an excellent cleaning effect can be obtained.

At this point, the upflow pushes the permeate in each of the membrane elements 13 to the upper downstream side between the filtration plate 17 and the filtration membrane 18. However, as shown in FIG. 12, the filtration membrane 18 includes the reversed portion 20 folded to include the end 19 on the downstream side of the filtration plate 17. Therefore, the permeate pushed to the upper downstream side between the filtration plate 17 and the filtration membrane 18 is collected in the revered portion 20. The filtration membrane 18 flexibly swells in the reversed portion 20 to allow the permeate to move. Further, since a swell 20a of the reversed portion 20 is formed in the downstream area of the end 19 on the downstream side of the filtration plate 17, the swell 20a of the reversed portion 20 does not act as a resistance against the upflow flowing along the filtration plate 17. Vibrations and stresses do not occur in the filtration membrane 18 because of the swell 20a of the reversed portion 20.

Therefore, a load acting on the filtration membrane 18 is suppressed to prevent the filtration membrane 18 from being broken because the reversed portion 20 flexibly swells to allow the permeate to move flexibly and the swell 20a does not act as a resistance against the upflow.

### (Second Embodiment)

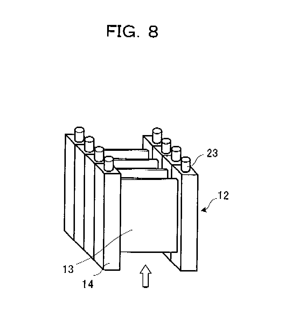

As shown in FIG. 8, a membrane module 12 may have a configuration in which water collecting cases 14 are arranged respectively on both sides of a single membrane element 13. In this case, a plurality of the membrane modules 12 are arranged in parallel to form channels in a vertical direction between the membrane elements 13. The membrane element 13 used in this case may be the membrane element 13 in any one of the above-described forms.

In this configuration, it is possible to realize the same operations and effects as those in the first embodiment.

### (Third Embodiment)

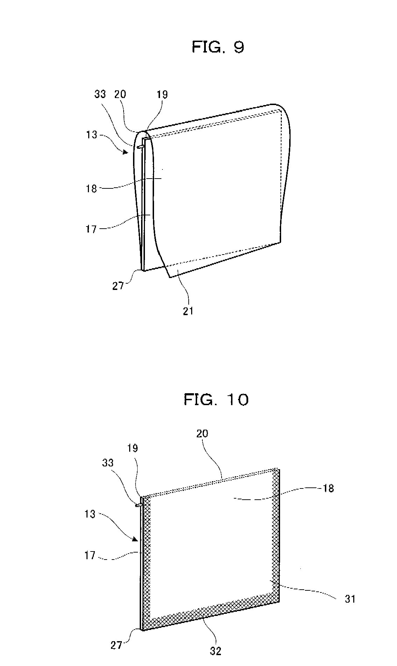

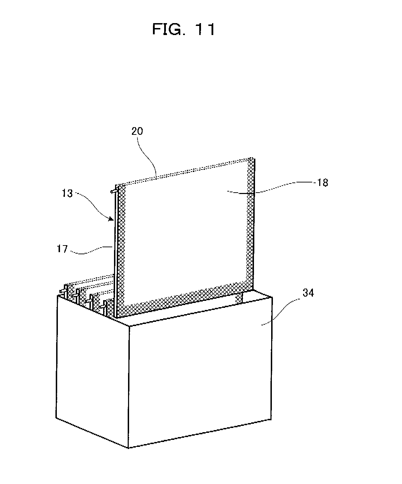

As shown in FIGS. 9 to 11, in a membrane element 13, a filtration membrane 18 includes a reversed portion 20 folded to include an end 19 on the downstream side of a filtration plate 17. A peripheral edge portion 31 of the filtration membrane 18 is joined to the principal surfaces on the front and back of the filtration plate 17 and the end 19 on the downstream side to form a joined portion 32 over the entire periphery of the filtration membrane 18.

In this embodiment, the joined portion 32 is formed by applying ultrasonic vibrations from above the filtration membrane 18 and welding the filtration plate 17 and the filtration membrane 18 with frictional heat. However, the filtration plate 17 and the filtration membrane 18 may be joined with an adhesive. The filtration plate 17 includes a water collecting port 33 on the side thereof and, in an area covered by the filtration membrane 18, a permeate channel (not shown) communicating with the water collecting port 33.

In this embodiment, the peripheral edge portion 31 of the filtration membrane 18 is joined to the filtration plate 17 over the entire periphery of the filtration membrane 18. However, it is possible to form the filtration membrane 18 larger than the filtration plate 17, extend the peripheral edge portion 31 of the filtration membrane 18 from the peripheral edge of the filtration plate 17 to the outer side, and join the peripheral edge portions 31 of the filtration membranes 18 to each other, the peripheral edge portions 31 being opposed in the front-to-back direction of the filtration plate 17 outside the end of the filtration plate 17, over the entire periphery of the filtration membrane 18.

The membrane element 13 having this configuration is accommodated in a case 34 and is used. Specifically, a plurality of the membrane elements 13 are arranged in parallel in the case 34 to form channels between the membrane elements 13.

During an operation, air is diffused as a gas for aeration from an air diffuser (not shown) arranged under the case 34 and upflow of an air-liquid mixture is caused in the case 34 by the air-lift action of bubbles of the air.

Even in this configuration, the same operations and effects as those in the first embodiment can be realized. Even if the process of aerating and cleaning is performed in a state in which a filtration operation remains stopped, it is possible to realize a membrane element in which breakage of a filtration membrane is unlikely to occur, and obtain an excellent cleaning effect for preventing fouling.

## Claims

1. A membrane element comprising: a membrane supporting member arranged along a flowing direction of a liquid to be treated; a filtration membrane formed of a flat sheet membrane that is arranged to cover surfaces on a front and a back of the membrane supporting member; a reversed portion of the filtration membrane folded to include an end on a downstream side of the membrane supporting member; and a seal portion formed in a peripheral edge portion of the filtration membrane.

2. The membrane element according to claim 1, wherein the seal portion comprises: a joined portion for joining an edge side portion on an upstream side of the filtration membrane to the membrane supporting member; and a sealing material for binding an edge side portion of the filtration membrane onto the membrane supporting member on both sides of the membrane supporting member along the flowing direction of the liquid to be treated.

3. The membrane element according to claim 1, wherein the seal portion comprises: a joined portion for joining edge side portions on an upstream side of the filtration membrane to each other, the edge side portions on the upstream side being opposed in a front-to-back direction of the membrane supporting member outside an end of the membrane supporting member; and a sealing material for binding an edge side portion of the filtration membrane onto the membrane supporting member on both sides of the membrane supporting member along the flowing direction of the liquid to be treated.

4. The membrane element according to claim 1, wherein the seal portion comprises a joined portion for joining the peripheral edge portion of the filtration membrane to the membrane supporting member over an entire periphery of the filtration membrane.

5. The membrane element according to claim 1, wherein the seal portion comprises a joined portion for joining the peripheral edge portions of the filtration membrane to each other, the peripheral edge portions being opposed in a front-to-back direction of the membrane supporting member outside an end of the membrane supporting member, over an entire periphery of the filtration membrane.

6. A membrane module comprising: at least one membrane element; and a pair of water collecting cases, wherein
the membrane element comprises: a membrane supporting member arranged along a flowing direction of a liquid to be treated; a filtration membrane formed of a flat sheet membrane that is arranged to cover surfaces on a front and a back of the membrane supporting member; a reversed portion of the filtration membrane folded to include an end on a downstream side of the membrane supporting member; a joined portion for joining an edge side portion on an upstream side of the filtration membrane to the membrane supporting member; and a sealing material for binding an edge side portion of the filtration membrane onto the membrane supporting member on both sides of the membrane supporting member along the flowing direction of the liquid to be treated, and
each of the water collecting cases comprises an opening portion communicating with a water collecting space in the water collecting case, and a side of the membrane element inserted in the opening portion is water-tightly kept by the sealing material.

7. A membrane module comprising: at least one membrane element; and a pair of water collecting cases, wherein
the membrane element comprises: a membrane supporting member arranged along a flowing direction of a liquid to be treated; a filtration membrane formed of a flat sheet membrane that is arranged to cover surfaces on a front and a back of the membrane supporting member; a reversed portion of the filtration membrane folded to include an end on a downstream side of the membrane supporting member; a joined portion for joining edge side portions on an upstream side of the filtration membrane to each other, the edge side portions on the upstream side being opposed in a front-to-back direction of the membrane supporting member via an end of the membrane supporting member; and a sealing material for binding an edge side portion of the filtration membrane onto the membrane supporting member on both sides of the membrane supporting member along the flowing direction of the liquid to be treated, and
each of the water collecting cases comprises an opening portion communicating with a water collecting space in the water collecting case, and a side of the membrane element inserted in the opening portion is water-tightly kept by the sealing material.
